# FASCICULE DE BREVET EUROPEEN

(11) **EP 4 173 734 B1**
(45) Date de publication et mention de la délivrance du brevet: **20.08.2025**
(21) Numéro de dépôt: 22204141.0
(22) Date de dépôt: 27.10.2022
(51) Int. Cl.: B08B 9/032, C02F 1/68, C02F 1/76

(54) **DISPOSITIF MOBILE ADAPTÉ POUR LA DÉSINFECTION DES CANALISATIONS D'EAU POTABLE**
MOBILE VORRICHTUNG ZUR DESINFEKTION VON TRINKWASSERLEITUNGEN
MOBILE DEVICE ADAPTED FOR THE DISINFECTION OF DRINKING WATER PIPES

(30) Priorité: 27.10.2021 FR 2111422
(43) Date de publication de la demande: 03.05.2023
(73) Titulaire: Graviwater, 06700 Saint Laurent Du Var (FR)
(72) Inventeur: GHEDINI, Kevin Emmanuel, 06610 LA GAUDE (FR)
(74) Mandataire: Lavoix

(56) Documents cités:
- EP-A1- 0 551 761
- EP-A1- 2 599 563
- WO-A1-2012/126486
- WO-A2-2008/015678
- DE-A1- 102016 215 454
- DE-T5- 112012 006 972
- DE-U1- 202019 102 176
- DE-U1- 9 104 336
- FR-A1- 2 681 853
- US-A1- 2002 011 436
- US-A1- 2012 234 939
- US-A1- 2020 399 152
- US-B1- 8 562 310
- US-B2- 8 557 126
- US-B2- 9 145 314

## Description

La présente invention concerne un dispositif mobile adapté pour la désinfection des canalisations d'eau potable.

Il est connu d'employer un produit biocide tel que le chlore dans le traitement des canalisations d'eau potable avant leur mise en service.

Pour cela, il est nécessaire de doser le chlore à diluer afin de dispenser la quantité de chlore désirée dans les canalisations. A cet effet, un opérateur dose le chlore pour le diluer dans l'eau en le manipulant à plusieurs reprises, notamment pendant la phase de dilution et de raccordement des connectiques.

Cependant, même en appliquant les précautions nécessaires à l'usage d'un tel produit, le chlore est un produit toxique qui se désagrège rapidement et l'utilisateur peut être exposé à un risque pour sa santé en le manipulant notamment du fait des éclaboussures, des brûlures et des irritations.

Ainsi, une telle manière de procéder ne donne pas entière satisfaction.

Il existe donc un besoin pour améliorer la sécurité des personnes amenées à traiter les canalisations.

Le document FR 2 681 853 décrit un dispositif mobile adapté et sécurisé pour la désinfection des canalisations d'eau potable, le dispositif comprenant une paroi externe délimitant un logement interne, un circuit hydraulique et un réservoir conçu pour recevoir un produit de traitement de la canalisation.

L'invention a notamment pour but de remédier à cet inconvénient, en fournissant un dispositif mobile adapté pour la désinfection des canalisations d'eau potable, permettant d'améliorer la sécurité des opérateurs vis-à-vis des produits chimiques.

A cet effet, l'invention a pour objet un dispositif mobile selon la revendication 1.

Grâce au dispositif selon l'invention, le produit est prêt à l'emploi directement installé dans le dispositif à l'aide du réservoir et dosé sans manipulation par la pompe doseuse. L'opérateur n'a plus à doser lui-même le produit, par conséquent les risques liés à l'exposition aux produits chimiques sont éliminés.

Un dispositif selon l'invention peut être selon l'une quelconque des revendications 2 à 10.

L'invention sera mieux comprise à la lecture de la description qui va suivre, donnée uniquement à titre d'exemple et faite en se référant aux figures annexées, parmi lesquelles :
- la figure 1 est une vue en perspective de la face avant d'un dispositif mobile selon l'invention ;
- la figure 2 est une vue en perspective de la face arrière du dispositif de la Figure 1 ;
- la figure 3 est une vue en coupe du dispositif de la Figure 1 montrant le circuit hydraulique et le réservoir en place ;
- la figure 4 est une vue en perspective de la face avant du réservoir du dispositif de la Figure 1 ; et

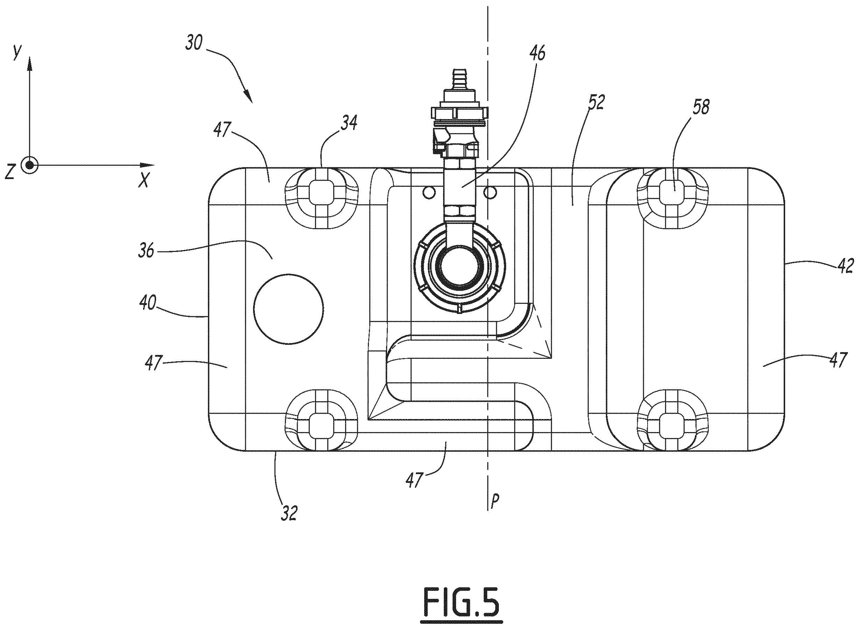

- la figure 5 est une vue de la face supérieure du réservoir de la Figure 4.

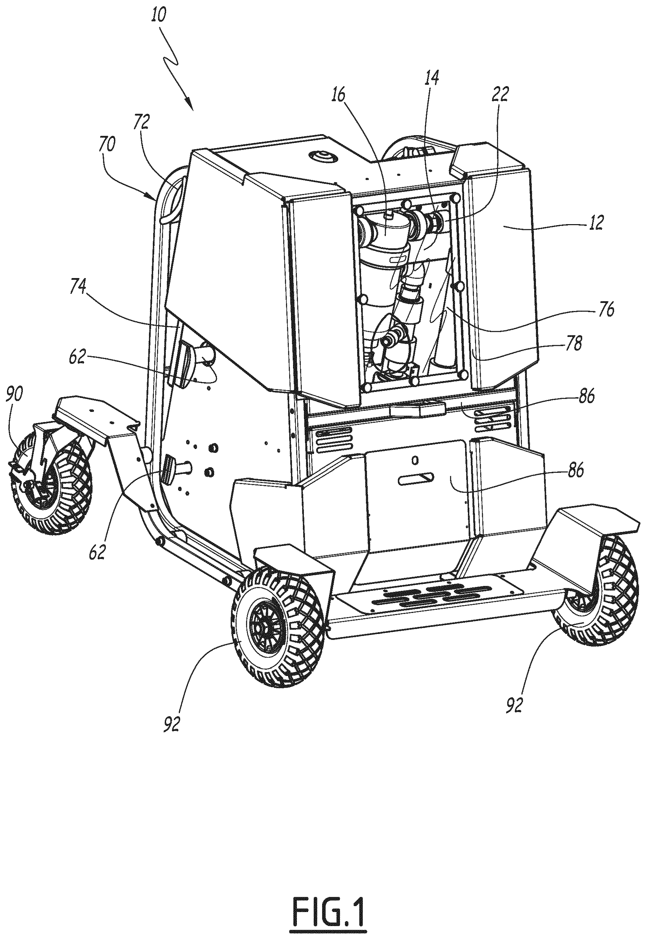

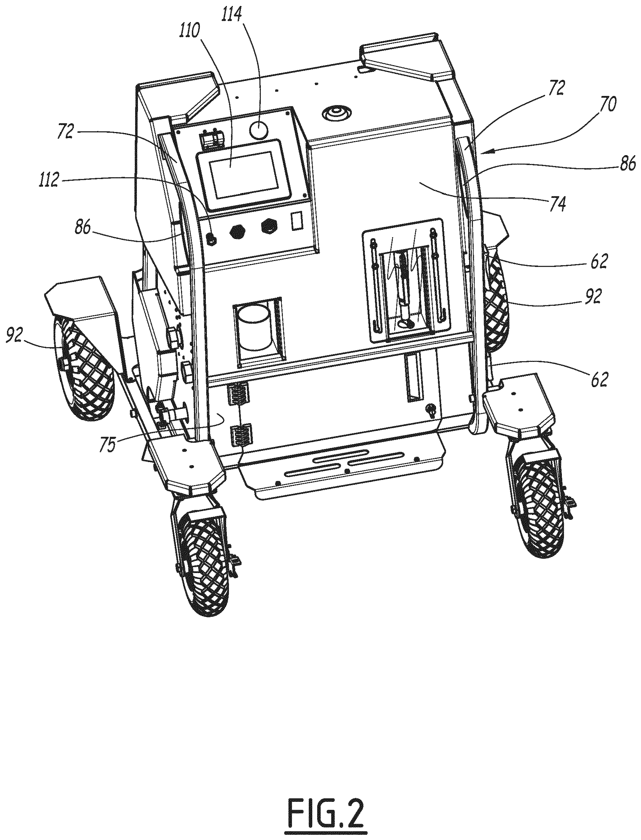

On a représenté, sur les figures 1 et 2, un dispositif mobile 10 adapté pour la désinfection des canalisations d'eau potable.

Le dispositif 10 présente une paroi externe 12 délimitant un logement interne 14.

Le dispositif 10 comporte un circuit hydraulique 16 présentant une première extrémité 18 apte à être connectée à un point d'eau et une seconde extrémité 20 apte à être connectée à une canalisation d'eau potable à désinfecter.

Le circuit hydraulique 16 est disposé dans le logement interne 14 du dispositif 10.

Le circuit hydraulique 16 est réalisé en matériaux étanches.

Le circuit hydraulique 16 comprend des tuyaux 22 avantageusement réalisés en polypropylène Random et polyfluorure de vinilydène.

Le circuit hydraulique 16 est avantageusement en un seul bloc.

Le dispositif 10 comprend au moins un réservoir 30 conçu pour contenir un produit, en particulier un produit de traitement de la canalisation ou de neutralisation, et distribuer ledit produit lors de l'utilisation du dispositif 10.

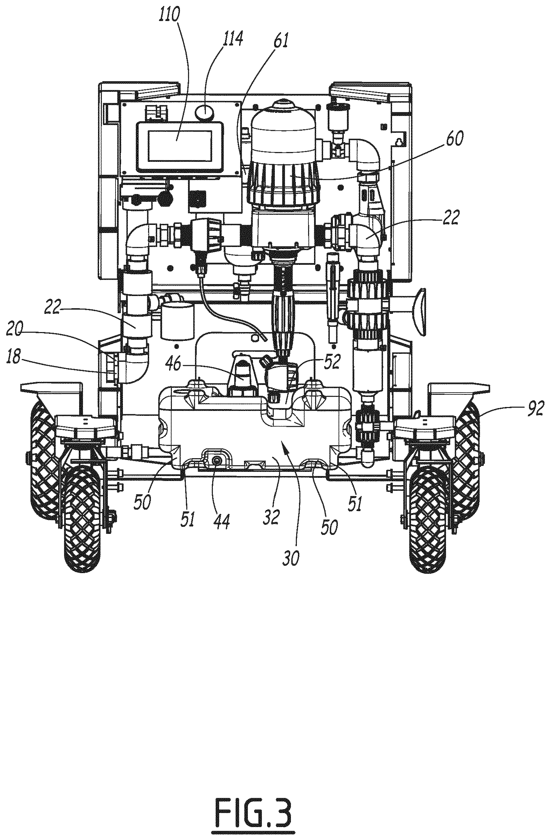

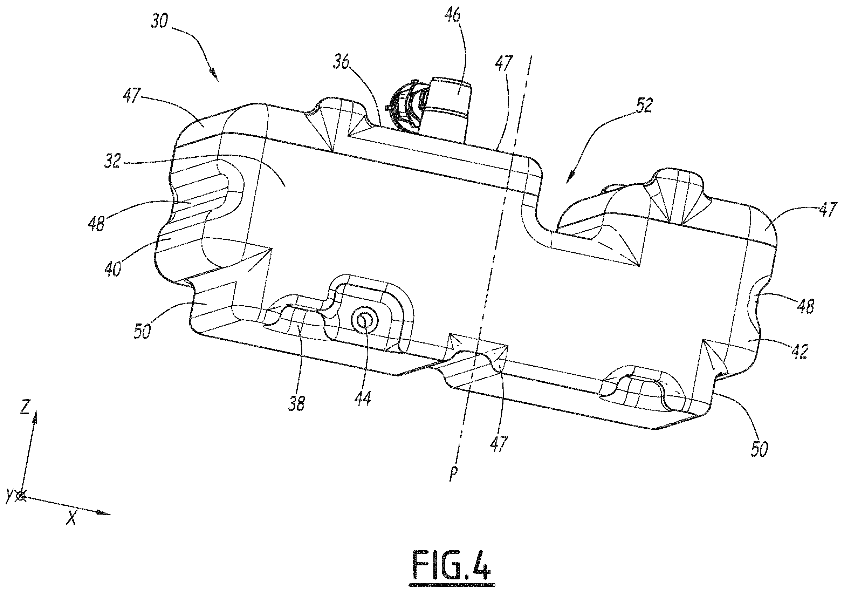

Le réservoir 30 représenté sur les Figures 3 et 4 présente une forme le rendant propre à être encastré dans le logement interne 14 du dispositif 10 et à se connecter au circuit hydraulique 16 sans manipulation humaine de raccords donc en évitant tout contact de produit biocide.

En particulier, le réservoir 30 présente une forme générale s'inscrivant dans un parallélépipède rectangle.

Ainsi, le réservoir 30 présente six faces 32, 34, 36, 38, 40, 42 comprenant une face avant 32, une face arrière 34 opposée à la face avant 32, une face supérieure 36, une face inférieure 38 opposée à la face supérieure 36, et deux faces latérales 40, 42 opposées.

Les faces latérales 40, 42 sont matérialisées par les faces de plus petite dimension.

La face avant 32 porte une sortie de vidange 44 du réservoir 30.

La face avant 32 et la face arrière 34 s'étendent chacune suivant une direction longitudinale X et une direction d'élévation Z perpendiculaire à la direction longitudinale X.

La face supérieure 36 porte un connecteur 46 dit « click and dose » (« cliquer et doser » en français) propre à relier fluidiquement et de façon étanche le réservoir 30 au circuit hydraulique 16.

Le réservoir 30 présente des bords 47 arrondis.

Les faces latérales 40, 42 s'étendent chacune suivant une direction transversale Y perpendiculaire à la direction longitudinale X et suivant la direction d'élévation Z perpendiculaire à la direction transversale Y et à la direction longitudinale X.

Les faces latérales 40, 42 présentent chacune une première rainure 48 et une deuxième rainure 50, les deux rainures 48, 50 s'étendant chacune de la face avant 32 à la face arrière 34.

Chaque deuxième rainure 50 est ménagée entre l'une des faces latérales 40, 42 et la face inférieure 38 du réservoir 30.

Avantageusement, les deux rainures 48, 50 s'étendent sensiblement parallèlement à la direction transversale Y.

Les rainures 48, 50 des faces latérales 40, 42 sont de préférence symétriques d'une face latérale 40 à l'autre face latérale 42 par rapport à un plan transversal médian P perpendiculaire à la direction longitudinale X et séparant le réservoir 30 en deux moitiés de même longueur.

Les deuxièmes rainures 50 sont complémentaires de rails de guidage 51 ménagés dans le logement interne 14 du dispositif 10.

La face supérieure 36 présente une rainure 52 s'étendant de la face avant 32 à la face arrière 34.

Avantageusement, la rainure 52 de la face supérieure 36 s'étend sensiblement parallèlement à la direction transversale Y.

La rainure 52 est de préférence décalée par rapport au plan transversal médian P, de sorte qu'un opérateur souhaitant glisser le réservoir 30 dans le logement interne 14 du dispositif mobile 10 ne peut pas se tromper quant au sens d'installation du réservoir 30.

La rainure 52 permet d'interposer le réservoir 30 sous une pompe doseuse 60 qui sera décrite ci-dessous, sans qu'il y ait de contact entre le réservoir 30 et la pompe doseuse 60 lors de l'utilisation du dispositif mobile 10.

La rainure 52 présente avantageusement en outre une portion s'étendant sensiblement parallèlement à la direction longitudinale X.

La face supérieure 36 présente quatre plots 58 répartis au voisinage des quatre extrémités de la face supérieure 36.

Les plots 58 permettent le gerbage des réservoirs 30 sur l'axe d'élévation Z facilitant leur transport groupé.

Le réservoir 30 présente avantageusement une capacité comprise entre 10 L et 15 L, en particulier sensiblement égale à 13 L.

Le réservoir 30 est avantageusement réalisé en Polyethylène haute densité afin de résister aux produits chimiques qu'il contient.

Le réservoir 30 est par exemple réalisé par thermoformage ou par rotomoulage.

Le réservoir 30 étant encastré dans le dispositif 10, il n'est ainsi pas soumis aux rayons ultraviolets qui jouent sur la désagrégation de nombreux produits chimiques.

Par exemple, le réservoir 30 est rempli en laboratoire avec du chlore dilué dans de l'eau distillée à une concentration massique définie, qui couplée au ratio de dosage permet d'atteindre le taux de désinfection légal.

En variante, le produit contenu dans le réservoir 30 est de l'acide paracétique, du peroxyde d'hydrogène, du thiosulfate de sodium, ou tout autre produit adapté à l'intervention souhaitée.

Pour installer le réservoir 30 dans le logement interne 14, il suffit de faire glisser les deuxièmes rainures 50 des faces latérales 40, 42 le long des rails prévus à cet effet dans le logement interne 14 en plaçant la rainure 52 de la face supérieure 36 sous la pompe doseuse 60, puis d'encliqueter le connecteur 46 au circuit hydraulique 16.

Ainsi, le réservoir 30 est prêt à l'emploi, il peut être manipulé aisément et sans risque par un opérateur.

Le dispositif 10 comprend une pompe doseuse 60 reçue dans le logement interne 14, placée en aval du réservoir 30 et propre à doser ledit produit et le diluer avec de l'eau provenant du point d'eau auquel le dispositif 10 sera connecté.

La pompe doseuse 60 est par exemple une pompe à piston.

Le circuit hydraulique 16 comprend en outre un filtre 61
Le filtre 61 permet de retenir les particules grossières pouvant endommager le fonctionnement mécanique de la pompe doseuse.

Le circuit hydraulique 16 comprend au moins une vanne 62 propre à mettre en communication fluidique le réservoir 30, le point d'eau auquel le dispositif 10 sera connecté et la pompe doseuse 60 lorsque l'au moins une vanne 62 est en position ouverte, et à isoler le réservoir 30, le point d'eau auquel le dispositif 10 sera connecté et la pompe doseuse 60 lorsque l'au moins une vanne 62 est en position fermée.

En particulier, le circuit hydraulique comporte deux vannes 62.

Les vannes 62 sont par exemple des vannes quart de tour à boisseau sphérique.

Le dispositif 10 présente au moins un élément de préhension 70.

Par exemple, le dispositif 10 comprend deux poignées 72 placées de part et d'autre d'une face arrière 74 du dispositif 10.

L'élément de préhension 70 offre une bonne prise en main du dispositif 10 lors du déplacement de celui-ci.

La face arrière 74 présente une trappe 75 d'accès au réservoir 30.

Le dispositif 10 est avantageusement pourvu d'une vitre transparente 76 du côté d'une face avant 78 du dispositif 10 opposée à la face arrière 74.

La vitre transparente 76 permet de visualiser le circuit hydraulique 16.

Le dispositif 10 comprend avantageusement au moins un rangement 80. Par exemple, le dispositif 10 comporte un tiroir 82 placé sur la face avant 78. Le rangement 80 permet de stocker du matériel utile pour une intervention, notamment une mallette et/ou un bécher.

Le dispositif 10 comporte au moins un anneau de levage 86.

En particulier, le dispositif 10 présente un anneau de levage 86 sur sa face avant 78, entre le rangement 80 et la vitre 76 de visualisation du circuit hydraulique, et deux anneaux de levage 86 sur sa face arrière 74 au niveau des poignées 72.

L'au moins un anneau de levage 86 permet de faciliter la manutention du dispositif 10.

Le dispositif 10 présente avantageusement des dimensions extérieures maximales
de 1,50 m x 1,50 m x 1,30 m.

Le dispositif 10 présente par exemple une hauteur H maximale en utilisation comprise entre 0,90 m et 1,50 m, en particulier comprise entre 1,15 m et 1,25 m.

Une telle hauteur est particulièrement adaptée pour une utilisation agréable et ergonomique du dispositif 10.

Par exemple, le dispositif 10 présente une longueur L maximale comprise entre 0,90 m et 1,50 m, en particulier comprise entre 1,10 m et 1,30 m.

Par exemple, le dispositif 10 présente une largeur B maximale définie comprise entre 0,70 m et 1,30 m, en particulier comprise entre 0,95 m et 1,25 m.

La longueur et la largeur du dispositif 10 sont définies en tenant compte des roues.

Le dispositif 10 présente avantageusement une masse à vide, c'est-à-dire sans produit, inférieure à 35 kg, en particulier comprise entre 25 kg et 35 kg.

Une telle masse contribue à la maniabilité du dispositif 10.

Le dispositif 10 est par conséquent très compact, et peut être transporté dans un véhicule utilitaire.

Le dispositif est de préférence monté sur roues.

En particulier, le dispositif comprend quatre roues 90, 92.

Les roues 90, 92 comprennent par exemple deux roues directionnelles à l'arrière 90, et deux roues simples à l'avant 92.

Chaque roue arrière 90 est avantageusement pourvue d'un frein à pied.

Les roues 90, 92 sont avantageusement tout terrain, garantissant la polyvalence du dispositif.

Avantageusement, le dispositif 10 comprend en outre une douchette de sécurité chimique.

Une telle douchette permet à un opérateur de s'asperger d'eau en cas d'exposition fortuite à un produit chimique.

Le dispositif 10 comprend avantageusement une pluralité de capteurs, et un dispositif de traitement de données.

Le dispositif de traitement de données comprend par exemple un processeur propre à recevoir les données issues des capteurs recueillies lors de la désinfection d'une canalisation et à les traiter, une mémoire propre à enregistrer les données.

Par exemple, les capteurs sont propres à mesurer les volumes de liquide consommés, et la pression à différents endroits du circuit hydraulique 16.

Le dispositif 10 comprend de préférence en outre un système d'affichage 110.

Le système d'affichage 110 est par exemple un écran 110, de préférence un écran tactile.

Le système d'affichage 110 est avantageusement relié au dispositif de traitement de données, et permet de suivre en temps réel la désinfection de la canalisation.

En particulier, le système d'affichage 110 est propre à indiquer la perte de charge,, les volumes consommés et l'indicateur de colmatage déterminés par le dispositif de traitement de données. L'indicateur de colmatage permet de mesurer le taux d'encrassement du filtre 61.

Le système d'affichage 110 est avantageusement disposé sur la face arrière 74 du dispositif 10, à une hauteur confortable pour la lecture et la manipulation par un humain.

Le dispositif 10 comprend avantageusement une sortie 112 permettant de connecter un terminal afin de récupérer les données enregistrées dans la mémoire, par exemple une sortie USB ou USBC.

Le dispositif de traitement de données est en outre avantageusement pourvu d'un émetteur permettant de communiquer avec un terminal selon un protocole de communication à distance.

Le protocole de communication à distance est par exemple le WiFi.

Le dispositif 10 comprend avantageusement en outre un afficheur de pression 114 du liquide circulant dans le circuit hydraulique 16.

Un procédé d'utilisation du dispositif 10 décrit précédemment va maintenant être décrit.

Le dispositif 10 est déplacé jusqu'à l'endroit où une intervention, par exemple la désinfection d'une canalisation d'eau potable, est souhaitée.

Le dispositif 10 est avantageusement déplacé grâce à l'au moins un élément de préhension et aux roues 90, 92.

Le circuit hydraulique 16 est raccordé via sa première extrémité 18 à un point d'eau.

La deuxième extrémité 20 est raccordée à la canalisation à désinfecter.

Le réservoir 30 est installé en faisant glisser les deuxièmes rainures 50 le long des rails prévus à cet effet dans le logement interne 14 et en plaçant la rainure 52 de la face supérieure 36 sous la pompe doseuse 60, puis en encliquetant le connecteur 46 au circuit hydraulique 16.

Le point d'eau est ouvert afin de faire couler de l'eau dans le circuit hydraulique 16 et de créer une aspiration dans la pompe doseuse 60.

Le produit contenu dans le réservoir 30 est amené dans la pompe doseuse 60 à l'aide de l'au moins une vanne 62 en position ouverte.

La pompe doseuse 60 éjecte dans le circuit hydraulique 16 en aval le produit mélangé à l'eau dans les proportions désirées.

Le produit correctement dosé et mélangé à l'eau est envoyé dans la canalisation à désinfecter, sans aucun contact direct avec un opérateur.

Avantageusement, pendant ce processus, la pluralité de capteurs recueille les données telles que les volumes de liquide biocide consommés, le taux d'encrassement et le volume d'eau potable utilisé.

Le dispositif de traitement de données reçoit les données issues des capteurs, et la mémoire enregistre les données.

Le système d'affichage 110 affiche les données traitées par le dispositif de traitement de données.

En particulier, le système d'affichage 110 est affiche la perte de charge et les volumes consommés déterminés par le dispositif de traitement de données.

Les données enregistrées dans la mémoire peuvent être récupérées en connectant un terminal à la sortie prévue à cet effet.

En variante, le dispositif de traitement de données communique avec un terminal au moyen de l'émetteur selon un protocole de communication à distance, par exemple le WiFi.

En fin d'intervention, par exemple lorsqu'il est nécessaire de neutraliser le produit avant utilisation de la canalisation, le réservoir 30 contenant le produit utilisé est retiré du logement interne 14, toujours sans contact chimique, et un autre réservoir 30 contenant un produit différent est placé dans le logement interne 14, de la même manière que décrit ci-dessus.

Le dispositif décrit précédemment présente donc de nombreux avantages par rapport aux méthodes employées usuellement, de nombreuses fonctionnalités, une ergonomie adaptée et surtout une sécurité bien supérieure par l'absence de contact entre les opérateurs et les produits biocides corrosifs tels que le chlore , l'hypochlorite de sodium, l'acide peracétique et le peroxyde d'hydrogène .

## Revendications

1. Dispositif (10) mobile adapté et sécurisé pour la désinfection des canalisations d'eau potable, le dispositif (10) présentant une paroi externe (12) délimitant un logement interne (14), un circuit hydraulique (16) reçu dans le logement interne (14), et présentant une première extrémité (18) apte à être connectée à un point d'eau et une deuxième extrémité (20) apte à être connectée à une canalisation d'eau potable à désinfecter, au moins un réservoir (30) conçu pour recevoir un produit de traitement de la canalisation, une pompe doseuse (60) reçue dans le logement, placée en aval du réservoir (30) et propre à doser ledit produit et à le mélanger à de l'eau, **caractérisé en ce que** le réservoir (30) présente une forme le rendant propre à être encastré dans le logement du dispositif (10) et présente un connecteur (46) propre à raccorder fluidiquement et de façon étanche le réservoir (30) au circuit hydraulique (16) par encliquetage.

2. Dispositif (10) selon la revendication 1, dans lequel le réservoir (30) présente au moins une rainure (50) complémentaire d'au moins un rail (51) ménagé dans le logement interne (14) du dispositif (10).

3. Dispositif (10) selon la revendication 1 ou 2, dans lequel le réservoir (30) présente une forme générale s'inscrivant dans un parallélépipède rectangle, et comprend une face avant (32), une face arrière (34) opposée à la face avant (32), une face supérieure (36), une face inférieure (38) opposée à la face supérieure (36), et deux faces latérales (40, 42) opposées matérialisées par les faces de plus petite dimension, les faces latérales (40, 42) s'étendant chacune suivant une direction transversale (Y) et suivant une direction d'élévation (Z) perpendiculaire à la direction transversale (Y), et dans lequel les faces latérales (40, 42) présentent chacune une première rainure (48) et une deuxième rainure (50) s'étendant chacune de la face avant (32) à la face arrière (34), les deux rainures (48, 50) s'étendant sensiblement parallèlement à la direction transversale (Y), les deux rainures (48, 50) de chaque face latérale (40, 42) étant de préférence symétriques par rapport à un plan transversal médian (P) perpendiculaire à une direction longitudinale (X) elle-même perpendiculaire aux directions transversale (Y) et verticale (Z), le plan transversal médian (P) séparant le réservoir (30) en deux moitiés de même longueur.

4. Dispositif (10) selon la revendication 3, dans lequel la face supérieure (34) du réservoir (30) présente une rainure (52) s'étendant de la face avant (32) à la face arrière (34), la rainure (52) s'étendant sensiblement parallèlement à la direction transversale (Y), la rainure (52) étant décalée par rapport au plan transversal médian (P).

5. Dispositif (10) selon l'une quelconque des revendications 1 à 4, dans lequel le dispositif (10) comporte au moins un anneau de levage (86).

6. Dispositif (10) selon l'une quelconque des revendications 1 à 5, dans lequel le dispositif (10) présente des dimensions extérieures maximales de 1,50 m x 1,50 m x 1,30 m.

7. Dispositif (10) selon l'une quelconque des revendications 1 à 6, dans lequel le dispositif (10) est monté sur roues.

8. Dispositif (10) selon la revendication 7, comprenant quatre roues (90, 92), chaque roue (90, 92) étant pourvue d'un frein à pied.

9. Dispositif (10) selon l'une quelconque des revendications 1 à 8, comprenant une pluralité de capteurs, un dispositif de traitement de données configuré pour recevoir les données issues des capteurs recueillies lors de la désinfection d'une canalisation et à les traiter, et un système d'affichage (110) propre à afficher les données recueillies et traitées par le dispositif de traitement de données.

10. Dispositif (10) selon l'une quelconque des revendications 1 à 9, dans lequel le circuit hydraulique (16) comprend au moins une vanne (62) propre à mettre en communication fluidique le réservoir (30), le point d'eau auquel le dispositif (10) sera connecté et la pompe doseuse (60) lorsque l'au moins une vanne (62) est en position ouverte, et à isoler le réservoir (30), le point d'eau auquel le dispositif (10) sera connecté et la pompe doseuse (60) lorsque la vanne (62) est en position fermée.

## Patentansprüche

1. Mobile Vorrichtung (10), die zur Desinfektion von Trinkwasserleitungen angepasst und befestigt ist, wobei die Vorrichtung (10) eine Außenwand (12), die eine innere Aufnahme (14) begrenzt, einen Hydraulikkreislauf (16), der in der inneren Aufnahme (14) aufgenommen ist, aufweist, und ein erstes Ende (18), das geeignet ist, um mit einer Wasserstelle verbunden zu werden, und ein zweites Ende (20), das geeignet ist, um mit einer zu desinfizierenden Trinkwasserleitung verbunden zu werden, mindestens einen Behälter (30), der ausgelegt ist, um ein Produkt zur Behandlung der Leitung aufzunehmen, eine in der Aufnahme aufgenommene Dosierpumpe (60), die stromabwärts von dem Behälter (30) angeordnet und geeignet ist, um das Produkt zu dosieren und es mit Wasser zu mischen, aufweist, **dadurch gekennzeichnet, dass** der Behälter (30) eine Form aufweist, die ihn geeignet macht, um in die Aufnahme der Vorrichtung (10) eingebettet zu werden, und einen Verbinder (46) aufweist, der geeignet ist, um den Behälter (30) durch Einrasten fluidisch und dicht mit dem Hydraulikkreislauf (16) zu verbinden.

2. Vorrichtung (10) nach Anspruch 1, wobei der Behälter (30) mindestens eine Nut (50) aufweist, die komplementär zu mindestens einer Schiene (51) ist, die in der inneren Aufnahme (14) der Vorrichtung (10) ausgebildet ist.

3. Vorrichtung (10) nach Anspruch 1 oder 2, wobei der Behälter (30) eine allgemeine Form aufweist, die sich in ein rechteckiges Parallelepiped einschreibt, und eine Vorderseite (32), eine der Vorderseite (32) gegenüberliegende Rückseite (34), eine Oberseite (36), eine der Oberseite (36) gegenüberliegende Unterseite (38) und zwei gegenüberliegende Seitenflächen (40, 42), die durch die Flächen mit der kleinsten Abmessung materialisiert sind, umfasst, die Seitenflächen (40, 42) sich jeweils entlang einer Querrichtung (Y) und entlang einer Erhebungsrichtung (Z) senkrecht zu der Querrichtung (Y) erstrecken, und wobei die Seitenflächen (40, 42) jeweils eine erste Nut (48) und eine zweite Nut (50) aufweisen, die sich jeweils von der Vorderseite (32) zu der Rückseite (34) erstrecken, die zwei Nuten (48, 50) sich im Wesentlichen parallel zu der Querrichtung (Y) erstrecken, wobei die zwei Nuten (48, 50) jeder Seitenfläche (40, 42) vorzugsweise symmetrisch in Bezug auf eine mittlere Querebene (P) senkrecht zu einer Längsrichtung (X) sind, die ihrerseits senkrecht zu der Querrichtung (Y) und zu der vertikalen Richtung (Z) ist, wobei die mittlere Querebene (P) den Behälter (30) in zwei gleich lange Hälften teilt.

4. Vorrichtung (10) nach Anspruch 3, wobei die Oberseite (34) des Behälters (30) eine Nut (52) aufweist, die sich von der Vorderseite (32) zu der Rückseite (34) erstreckt, wobei sich die Nut (52) im Wesentlichen parallel zu der Querrichtung (Y) erstreckt und die Nut (52) gegenüber der mittleren Querebene (P) versetzt ist.

5. Vorrichtung (10) nach einem der Ansprüche 1 bis 4, wobei die Vorrichtung (10) mindestens eine Ringschraube (86) umfasst.

6. Vorrichtung (10) nach einem der Ansprüche 1 bis 5, wobei die Vorrichtung (10) maximale Außenabmessungen von 1,50 m x 1,50 m x 1,30 m aufweist.

7. Vorrichtung (10) nach einem der Ansprüche 1 bis 6, wobei die Vorrichtung (10) auf Rädern montiert ist.

8. Vorrichtung (10) nach Anspruch 7, umfassend vier Räder (90, 92), wobei jedes Rad (90, 92) mit einer Fußbremse versehen ist.

9. Vorrichtung (10) nach einem der Ansprüche 1 bis 8, umfassend eine Vielzahl von Sensoren, eine Datenverarbeitungsvorrichtung, die konfiguriert ist, um die von den Sensoren stammenden Daten, die bei der Desinfektion eines Rohrs gesammelt werden, zu empfangen und zu verarbeiten, und ein Anzeigesystem (110), das geeignet ist, um die von der Datenverarbeitungsvorrichtung gesammelten und verarbeiteten Daten anzuzeigen.

10. Vorrichtung (10) nach einem der Ansprüche 1 bis 9, wobei der Hydraulikkreislauf (16) mindestens ein Ventil (62) umfasst, das geeignet ist, um den Behälter (30), die Wasserstelle, an die die Vorrichtung (10) angeschlossen wird, und die Dosierpumpe (60) in Fluidverbindung zu bringen, wenn das mindestens eine Ventil (62) in der offenen Position ist, und den Behälter (30), die Wasserstelle, an die die Vorrichtung (10) angeschlossen wird, und die Dosierpumpe (60) zu isolieren, wenn das Ventil (62) in der geschlossenen Position ist.

## Claims

1. Mobile device (10) adapted and secured for disinfecting drinking water pipes, the device (10) having an external wall (12) delimiting an internal housing (14), a hydraulic circuit (16) received in the internal housing (14), and having a first end (18) able to be connected to a water point and a second end (20) able to be connected to a drinking water pipe to be disinfected, **characterized in that** it comprises at least one tank (30) designed to receive a product for treating the pipe, a metering pump (60) received in the housing, placed downstream of the tank (30) and suitable for metering the said product and mixing it with water, **characterised in that** the tank (30) has a shape making it suitable for being embedded in the housing of the device (10) and has a connector (46) suitable for connecting the tank (30) fluidically and in a sealed manner to the hydraulic circuit (16) by snap-fitting.

2. Device (10) according to claim 1, in which the tank (30) has at least one groove (50) complementary to at least one rail (51) provided in the internal housing (14) of the device (10).

3. Device (10) according to claim 1 or 2, in which the tank (30) has an overall shape fitting within a rectangular parallelepiped, and comprises a front face (32), a rear face (34) opposite the front face (32), an upper face (36), a lower face (38) opposite the upper face (36), and two opposite lateral faces (40, 42) defined by the faces of smallest dimension, the lateral faces (40, 42) each extending along a transverse direction (Y) and along a vertical direction (Z) perpendicular to the transverse direction (Y), and in which the lateral faces (40, 42) each have a first groove (48) and a second groove (50), each extending from the front face (32) to the rear face (34), the two grooves (48, 50) extending substantially parallel to the transverse direction (Y), the two grooves (48, 50) on each lateral face (40, 42) preferably being symmetrical with respect to a median transverse plane (P) perpendicular to a longitudinal direction (X), which is itself perpendicular to both the transverse (Y) and vertical (Z) directions, the median transverse plane (P) dividing the tank (30) into two halves of equal length.

4. Device (10) according to claim 3, in which the upper face (34) of the tank (30) has a groove (52) extending from the front face (32) to the rear face (34), the groove (52) extending substantially parallel to the transverse direction (Y), the groove (52) being offset with respect to the median transverse plane (P).

5. A device (10) according to any one of claims 1 to 4, wherein the device (10) comprises at least one lifting ring (86).

6. A device (10) according to any one of claims 1 to 5, wherein the device (10) has maximum external dimensions of 1.50 m x 1.50 m x 1.30 m.

7. A device (10) according to any one of claims 1 to 6, wherein the device (10) is mounted on wheels.

8. Device (10) according to claim 7, comprising four wheels (90, 92), each wheel (90, 92) being provided with a foot brake.

9. Device (10) according to any one of claims 1 to 8, comprising a plurality of sensors, a data processing device configured to receive data from the sensors collected during disinfection of a pipe and to process it, and a display system (110) capable of displaying the data collected and processed by the data processing device.

10. Device (10) according to any one of claims 1 to 9, in which the hydraulic circuit (16) comprises at least one valve (62) capable of placing the tank (30), the point of water to which the device (10) will be connected and the metering pump (60) in fluid communication when the at least one valve (62) is in the open position, and of isolating the tank (30), the point of water to which the device (10) will be connected and the metering pump (60) when the valve (62) is in the closed position.
